# EUROPEAN PATENT APPLICATION

(11) **EP 4 797 825 A1**
(43) Date of publication of application: **26.08.2026**
(21) Application number: 23955639.2
(22) Date of filing: 16.10.2023
(51) Int. Cl.: H04W 72/04

(54) **RESOURCE CONFIGURATION METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); SUN, Gang, Beijing 100022 (CN)
(74) Representative: Haseltine Lake Kempner LLP
(86) International application number: PCT/CN2023/124763
(87) International publication number: WO 2025/081310

(57) **Abstract**

The embodiments of the present application provide a resource configuration method and apparatus. The resource configuration method includes: a terminal equipment receives configuration information from a network device, wherein the configuration information includes a resource configuration, the resource configuration includes a second set for beam measurement and a first set for beam prediction, and the configuration information further includes a reporting configuration for reporting in respect of the second set and/or the first set.

## Description

### TECHNICAL FIELD

Embodiments of the present application relate to the field of communications technologies.

### BACKGROUND

In NR Rel-18, artificial intelligence or machine learning (AI/ML) has been studied for an air interface. AI/ML may be used for the following use cases: Channel State Information (CSI) feedback enhancement, beam management, and positioning enhancement. The CSI feedback enhancement may include CSI prediction and CSI compression; the beam management may include spatial beam prediction and temporal beam prediction; and the positioning enhancement may include direct positioning and AI/ML assisted positioning.

In some sub use cases, a bilateral model may be used, where an AI/ML model operates on both a terminal equipment side and a network device side. For example, CSI compression may serve as a representative use case of the bilateral model. In some other sub use cases, a unilateral model may be used, where the AI/ML model operates on either a terminal equipment side or a network device side.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that a network device is able to configure a set for beam measurement and a set for beam prediction for a terminal equipment, but there is currently no explicit solution on how to perform the configuration.

To address at least one of the above problems, embodiments of the present application provide a resource configuration method and apparatus.

According to an aspect of embodiments of the present application, there is provided with a resource configuration method, including:
receiving, by a terminal equipment, configuration information from a network device,
wherein the configuration information includes a resource configuration, the resource configuration includes a second set for beam measurement and a first set for beam prediction, and the configuration information further includes a reporting configuration for reporting in respect of the second set and/or the first set.

According to another aspect of the embodiments of the present application, there is provided with a resource configuration apparatus, including:
a receiving unit configured to receive configuration information from a network device,
wherein the configuration information includes a resource configuration, the resource configuration includes a second set for beam measurement and a first set for beam prediction, and the configuration information further includes a reporting configuration for reporting in respect of the second set and/or the first set.

According to another aspect of embodiments of the present application, there is provided with a resource configuration method, including:
transmitting, by a network device, configuration information to a terminal equipment,
wherein the configuration information includes a resource configuration, the resource configuration includes a second set for beam measurement and a first set for beam prediction, and the configuration information further includes a reporting configuration for reporting in respect of the second set and/or the first set.

According to another aspect of the embodiments of the present application, there is provided with a resource configuration apparatus, including:
a transmitting unit configured to transmit configuration information to a terminal equipment,
wherein the configuration information includes a resource configuration, the resource configuration includes a second set for beam measurement and a first set for beam prediction, and the configuration information further includes a reporting configuration for reporting in respect of the second set and/or the first set.

According to another aspect of the embodiments of the present application, there is provided with a communication system, including:
a network device configured to transmit configuration information, wherein the configuration information includes a resource configuration, the resource configuration includes a second set for beam measurement and a first set for beam prediction, and the configuration information further includes a reporting configuration for reporting in respect of the second set and/or the first set; and
a terminal equipment configured to receive the configuration information from the network device.

One of the beneficial effects of the embodiments of the present application is that a set for beam measurement and a set for beam prediction is able to be configured for the terminal equipment, thereby improving accuracy and reliability of AI/ML.

With reference to the specification and drawings below, a specific embodiment of the present application is disclosed in detail, which specifies the manner in which the principle of the present application may be adopted. It should be understood that, the scope of the embodiments of the present application is not limited. Within the scope of the spirit and clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a CSI framework in NR;
FIG. 3 is a schematic diagram of a resource configuration method in the embodiments of the present application;
FIG. 4 is an exemplary diagram of resource configuration in the embodiments of the present application;
FIG. 5 is another exemplary diagram of resource configuration in the embodiments of the present application;
FIG. 6 is another exemplary diagram of resource configuration in the embodiments of the present application;
FIG. 7 is another exemplary diagram of resource configuration in the embodiments of the present application;
FIG. 8 is another exemplary diagram of resource configuration in the embodiments of the present application;
FIG. 9 is another exemplary diagram of resource configuration in the embodiments of the present application;
FIG. 10 is another exemplary diagram of resource configuration in the embodiments of the present application;
FIG. 11 is a schematic diagram of a resource configuration method in the embodiments of the present application;
FIG. 12 is a schematic diagram of a resource configuration apparatus in the embodiments of the present application;
FIG. 13 is a schematic diagram of a resource configuration apparatus in the embodiments of the present application;
FIG. 14 is a schematic diagram of a network device in the embodiments of the present application; and
FIG. 15 is a schematic diagram of a terminal equipment in the embodiments of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

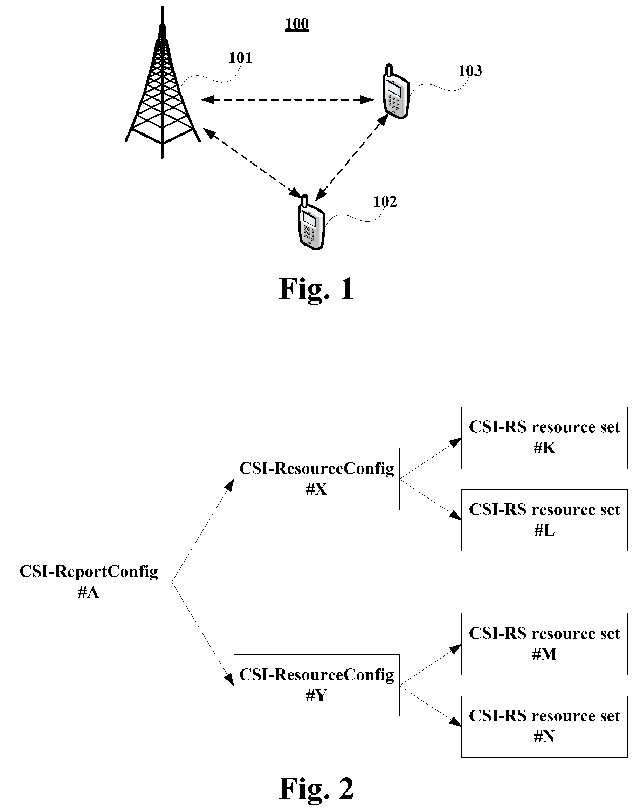

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In the embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network equipment 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In the embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling can also be Medium Access Control (MAC) signaling; or is also called MAC control element (MAC CE). However, the present application is not limited to this.

In NR, a CSI framework has been defined. The terminal equipment may be configured with one or more reporting settings/configurations (e.g., CSI-ReportConfig). Time and frequency resources for reporting are configured in the CSI-ReportConfig.

FIG. 2 is a schematic diagram of a CSI framework in NR. As shown in FIG. 2, one CSI-ReportConfig may be associated with one or more resource settings/configurations (e.g., CSI-ResourceConfig). One CSI resource setting/configuration may be linked to one or more Channel State Information Reference Signal (CSI-RS) resource sets/Channel State Information Synchronization Signal Block (CSI-SSB) resource sets. However, in respect of beam management using AI/ML, there is currently no explicit solution on how to configure a set for beam measurement and a set for beam prediction specifically.

In the embodiments of the present application, one or more AI/ML models may be configured and run in a network device and/or a terminal equipment. The AI/ML models may be used in various signal processing functions of wireless communication, such as CSI prediction, CSI compression, beam prediction or positioning management, etc. The present application is not limited to this.

### Embodiments of a First Aspect

The embodiments of the present application provide a resource configuration method, which is illustrated from a terminal equipment side.

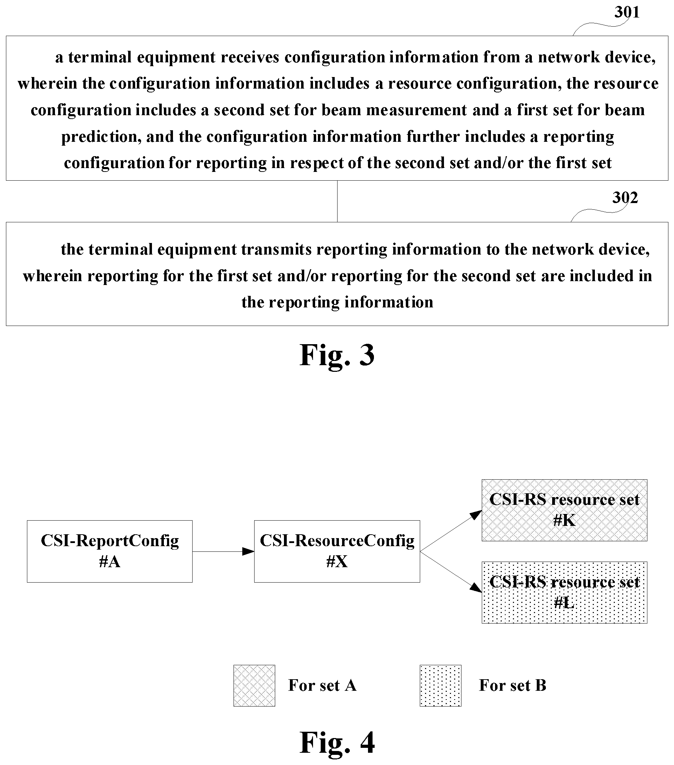

FIG. 3 is a schematic diagram of a resource configuration method in the embodiments of the present application, as shown in FIG. 3, the method including:
301: a terminal equipment receives configuration information from a network device, wherein the configuration information includes a resource configuration, the resource configuration includes a second set for beam measurement and a first set for beam prediction, and the configuration information further includes a reporting configuration for reporting in respect of the second set and/or the first set.

In some embodiments, as shown in FIG. 3, the method may further include:
302: the terminal equipment transmits reporting information to the network device, wherein reporting for the first set and/or reporting for the second set are included in the reporting information.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

In some embodiments, the terminal equipment or the network device is configured with an AI/ML model for beam management, a second set (which may be referred to as a set B, or may be referred to a set for measurement or a measurement set) is used for an input of the AI/ML model, and a first set (which may be referred to as a set A, or may be referred to a set for inference or an inference set) is used for an output of the AI/ML model.

For example, the set A and the set B may be applied to an AI/ML for beam management at a UE side, or may be applied to an AI/ML for beam management at a gNB side. The set B may be used as an input to the AI/ML, and the set A may be used to determine (or select, process, etc.) an output of the AI/ML.

In some embodiments, the first set and the second set are configured by using CSI-RS/CSI-SSB resource set(s), wherein one or more CSI-RS/CSI-SSB resource sets are configured as the first set, and one or more other CSI-RS/CSI-SSB resource sets are configured as the second set.

FIG. 4 is an exemplary diagram of resource configuration in the embodiments of the present application. As shown in FIG. 4, for example, for beam management with AI/ML, the set A and the set B may be configured for UE by different CSI-RS resource sets. That is, a CSI-RS resource set # K is configured as the set A, and a CSI-RS resource set # L is configured as the set B.

In some embodiments, a distinction between the CSI-RS/CSI-SSB resource set for the first set and the CSI-RS/CSI-SSB resource set for the second set is configured by RRC.

For example, one or more new RRC parameters may be introduced into the CSI-RS resource set, thus one of the set A and the set B may be configured using existing RRC parameters, and the other of the set A and the set B may be configured using new RRC parameters.

In some embodiments, the number of the CSI-RS/CSI-SSB resource set for the first set is the same as that of the CSI-RS/CSI-SSB resource set for the second set.

For example, if the number of the CSI-RS resource set for the set A is 1, then the number of the CSI-RS resource set for the set B is also 1. Or, if the number of the CSI-RS resource set for the set A is N1, then the number of the CSI-RS resource set for the set B is also N1.

In some embodiments, the number of the CSI-RS/CSI-SSB resource set for the first set is different from that of the CSI-RS/CSI-SSB resource set for the second set.

For example, if the number of the CSI-RS resource set for the set A is 1, then the number of the CSI-RS resource set for the set B is 2. Or, if the number of the CSI-RS resource set for the set A is N2, then the number of the CSI-RS resource set for the set B is N3.

In some embodiments, the number of reporting for the first set is the same as that of reporting for the second set.

For example, in reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be the same.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, the number of reporting for the first set is different from that of reporting for the second set.

For example, in reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be different.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, in the reporting information, the reporting for the first set or the reporting for the second set is identified explicitly by a resource set indicator.

For example, in the reporting information, an indicator (such as a resource set indicator) may be introduced to identify a corresponding CSI-RS resource set for an CSI-RS resource indicator (CRI)/an SSB resource indicator (SSBRI) (for example, the resource set indicator is used to identify which one of the CRI/SSBRI for the set A and the CRI/SSBRI for the set B). The length of the CRI/SSBRI is determined by the number of CSI-RS resources/SSBs in the corresponding resource set.

For another example, when the reporting for the set A and the reporting for the set B are both included in the reporting information, a differential reference signal received power (RSRP) may be performed between the set A and the set B, that is, the RSRP of the strongest beam in the set A and the set B may be used as a reference, and the RSRP of the remaining beams may be reported using differential information. The resource set indicator may also indicate the strongest beam comes from which one of the set A and the set B. Or, the differential RSRP may also be performed separately in the set A and the set B. That is, the RSRP of the strongest beam in the set A is used as a reference for the remaining beams in the set A, and the RSRP of the strongest beam in the set B is used as a reference for the remaining beams in the set B.

For another example, one CSI-RS resource set is configured as the set A, while another CSI/RS resource set is configured as the set B. The resource set indicator may be one bit and may indicate the maximum measured L1-RSRP comes from which one of the set A and the set B.

Table 1 exemplarily illustrates one example of reporting. For example, the resource set indicator is 1 bit. A value "0" indicates that the maximum measured L1-RSRP comes from the set A, and a value "1" indicates that the maximum measured L1-RSRP comes from the set B. The first one of the resource sets corresponds to a resource set for which the maximum measured L1-RSRP is reported.

**Table 1 Examples of L1-RSRP reporting for the set A and the set B**

| Resource Set indicator |
|---|
| CRI/SSBRI #1 of the 1st resource set |
| CRI/SSBRI #2 of the 1st resource set |
| CRI/SSBRI #3 of the 1st resource set |
| CRI/SSBRI #4 of the 1st resource set |
| CRI/SSBRI #1 of the 2nd resource set |
| CRI/SSBRI #2 of the 2nd resource set |
| CRI/SSBRI #3 of the 2nd resource set |
| CRI/SSBRI #4 of the 2nd resource set |
| RSRP of CRI/SSBRI #1 of the 1st resource set |
| Differential RSRP of CRI/SSBRI #2 of the 1st resource set |
| Differential RSRP of CRI/SSBRI #3 of the 1st resource set |
| Differential RSRP of CRI/SSBRI #4 of the 1st resource set |
| Differential RSRP of CRI/SSBRI #1 of the 2nd resource set |
| Differential RSRP of CRI/SSBRI #2 of the 2nd resource set |
| Differential RSRP of CRI/SSBRI #3 of the 2nd resource set |
| Differential RSRP of CRI/SSBRI #4 of the 2nd resource set |

In some embodiments, the reporting for the first set or the reporting for the second set is identified implicitly.

For example, in the reporting information, the resource set indicator may be implicit. The order of CRI/SSBRI may be predefined and implicitly indicate the CRI/SSBRI is used for which one of the set A and the set B.

For example, one CSI-RS resource set is configured as the set A, and another CSI/RS resource set is configured as the set B. If the reporting for the set A and the reporting for the set B are both included in the reporting information, the first N1 CRI/SSBRIs are used for the set A, and the subsequent N2 CRI/SSBRIs are used for the set B, where values of N1 and N2 can be predefined or configured, and N1 and N2 can be equal or not equal.

For another example, the CRI/SSBRIs for the set A and the set B are interlaced. For example, the first one of the CRI/SSBRIs is used for the set A, the second one of the CRI/SSBRIs is used for the set B, the third one of the CRI/SSBRIs is used for the set A, the fourth one of the CRI/SSBRIs is used for the set B, and so on.

Hereinbefore the case of configuring the set A and the set B with a resource set as a granularity is schematically illustrated, and hereinafter the case of configuring the set A and the set B with a resource as a granularity is schematically illustrated.

In some embodiments, the first set and the second set are configured by resources in a CSI-RS/CSI-SSB resource set, wherein one or more CSI-RS/CSI-SSB resources are configured as the first set, and one or more other CSI-RS/CSI-SSB resources are configured as the second set.

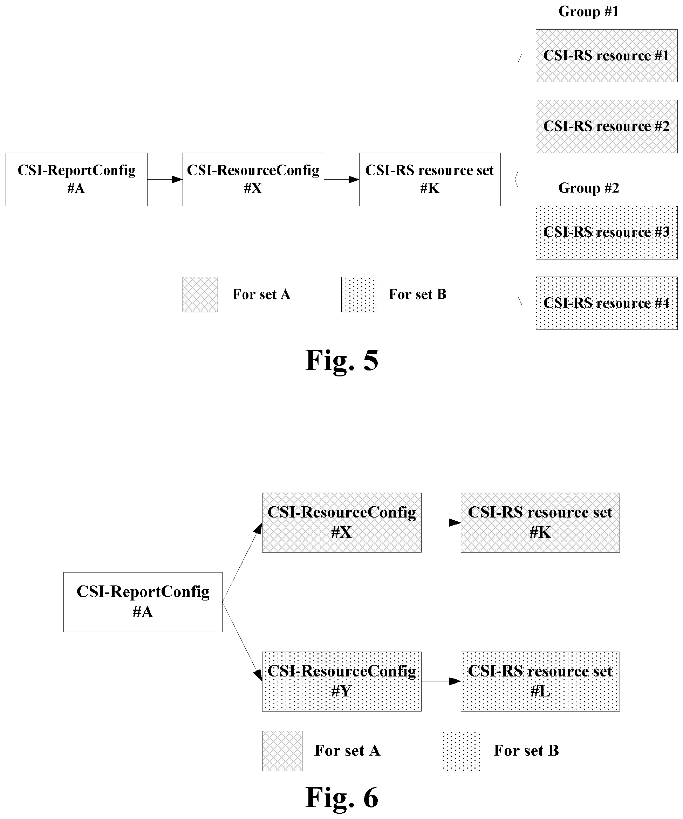

FIG. 5 is another exemplary diagram of resource configuration in the embodiments of the present application. As shown in FIG. 5, for example, for beam management with AI/ML, the set A and the set B may be configured for UE by different CSI-RS resources. That is, a CSI-RS resource # 1 and a CSI-RS resource # 2 are configured as the set A, and a CSI-RS resource # 3 and a CSI-RS resource # 4 are configured as the set B.

In some embodiments, the CSI-RS/CSI-SSB resource set for the first set is divided into a plurality of groups, one group including one or more CSI-RS/CSI-SSB resources and corresponding to the first set, and another group including one or more CSI-RS/CSI-SSB resources and corresponding to the second set.

For example, for beam management with AI/ML, the set A and the set B may be configured for UE via a same CSI-RS resource set (such as the CSI-RS resource set # K shown in FIG. 5). In the CSI-RS resource set, the CSI-RS resources may be divided into a plurality of groups, such as two groups (such as a group # 1 and a group # 2 as shown in FIG. 5). Each group contains one or more CSI-RS resources. One group corresponds to the set A, and the other group corresponds to the set B.

For another example, the set B may be a subset of the set A, and resource groups for the set A may include resource groups for the set B.

In some embodiments, the number of reporting for the first set is the same as that of reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be the same.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, the number of reporting for the first set is different from that of reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be different.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, in the reporting information, the reporting for the first set or the reporting for the second set is identified explicitly by a resource group indicator.

For example, in the reporting information, an indicator (such as a resource group indicator) may be introduced to identify a corresponding CSI-RS resource group for the CRI/SSBRI (for example, the resource group indicator is used to identify which one of the CRI/SSBRI for the set A and the CRI/SSBRI for the set B). The length of the CRI/SSBRI is determined by the number of CSI-RS resources/SSBs in the corresponding resource group.

In some embodiments, the reporting for the first set or the reporting for the second set is identified implicitly.

For example, in the reporting information, the resource group indicator may be implicit. The order of CRI/SSBRI may be predefined and implicitly indicate the CRI/SSBRI is used for which one of the set A and the set B.

For example, one CSI-RS resource group is configured as the set A, and another CSI/RS resource group is configured as the set B. If the reporting for the set A and the reporting for the set B are both included in the reporting information, the first N1 CRI/SSBRIs are used for the set A, and the subsequent N2 CRI/SSBRIs are used for the set B, where values of N1 and N2 can be predefined or configured, and N1 and N2 can be equal or not equal.

For another example, the CRI/SSBRIs for the set A and the set B are interlaced. For example, the first one of the CRI/SSBRIs is used for the set A, the second one of the CRI/SSBRIs is used for the set B, the third one of the CRI/SSBRIs is used for the set A, the fourth one of the CRI/SSBRIs is used for the set B, and so on.

Hereinbefore the case of configuring the set A and the set B with a resource as a granularity is schematically illustrated, and hereinafter the case of configuring the set A and the set B with a resource setting as a granularity is schematically illustrated.

In some embodiments, the first set and the second set are configured by resource settings, wherein one or more CSI-RS/CSI-SSB resource sets in one resource setting are configured as the first set, and one or more CSI-RS/CSI-SSB resource sets in another resource setting are configured as the second set.

FIG. 6 is another exemplary diagram of resource configuration in the embodiments of the present application. As shown in FIG. 6, for example, for beam management with AI/ML, the set A and the set B may be configured for UE by different CSI-RS resource settings (such as CSI-ResourceConfig). That is, CSI-ResourceConfig # X and a corresponding CSI-RS resource set # K are configured as the set A, and CSI-ResourceConfig # Y and a corresponding CSI-RS resource set # L are configured as the set B.

In some embodiments, the number of reporting for the first set is the same as that of reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be the same.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, the number of reporting for the first set is different from that of reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be different.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, in the reporting information, the reporting for the first set or the reporting for the second set is identified explicitly by a resource set indicator.

For example, in the reporting information, an indicator (such as a resource set indicator) may be introduced to identify a corresponding CSI-RS resource set for the CRI/SSBRI (for example, the resource set indicator is used to identify which one of the CRI/SSBRI for the set A and the CRI/SSBRI for the set B). The length of the CRI/SSBRI is determined by the number of CSI-RS resources/SSBs in the corresponding resource set.

For another example, when the reporting for the set A and the reporting for the set B are both included in the reporting information, the differential RSRP may be performed between the set A and the set B, that is, the RSRP of the strongest beam in the set A and the set B may be used as a reference, and the RSRP of the remaining beams may be reported using differential information. The resource set indicator may also indicate the strongest beam comes from which one of the set A and the set B. Or, the differential RSRP may also be performed separately in the set A and the set B. That is, the RSRP of the strongest beam in the set A is used as a reference for the remaining beams in the set A, and the RSRP of the strongest beam in the set B is used as a reference for the remaining beams in the set B.

For another example, one CSI-RS resource set is configured as the set A, while another CSI/RS resource set is configured as the set B. The resource set indicator may be one bit and may indicate the maximum measured L1-RSRP comes from which one of the set A and the set B. Reference may be made to the Table 1.

In some embodiments, the reporting for the first set or the reporting for the second set is identified implicitly.

For example, in the reporting information, the resource set indicator may be implicit. The order of CRI/SSBRI may be predefined and implicitly indicate the CRI/SSBRI is used for which one of the set A and the set B.

For example, one CSI-RS resource set is configured as the set A, and another CSI/RS resource set is configured as the set B. If the reporting for the set A and the reporting for the set B are both included in the reporting information, the first N1 CRI/SSBRIs are used for the set A, and the subsequent N2 CRI/SSBRIs are used for the set B, where values of N1 and N2 can be predefined or configured, and N1 and N2 can be equal or not equal.

For another example, the CRI/SSBRIs for the set A and the set B are interlaced. For example, the first one of the CRI/SSBRIs is used for the set A, the second one of the CRI/SSBRIs is used for the set B, the third one of the CRI/SSBRIs is used for the set A, the fourth one of the CRI/SSBRIs is used for the set B, and so on.

Hereinbefore the case of configuring the set A and the set B with a resource setting as a granularity is schematically illustrated, and hereinafter the case of configuring the set A and the set B with a reporting setting as a granularity is schematically illustrated.

In some embodiments, the first set and the second set are configured by a reporting setting, wherein one or more reporting resources are configured as the first set, and one or more other reporting resources are configured as the second set.

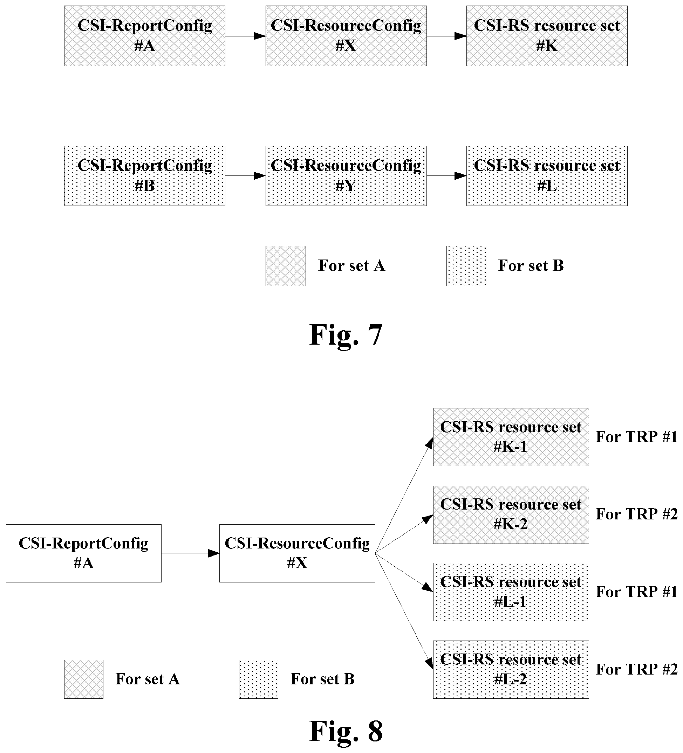

FIG. 7 is another exemplary diagram of resource configuration in the embodiments of the present application. As shown in FIG. 7, for example, for beam management with AI/ML, the set A and the set B may be configured for UE by different CSI-RS reporting settings (or reporting configurations, such as CSI-ReportConfig). For example, CSI-ReportConfig # A and corresponding CSI-ResourceConfig # X and CSI-RS resource set # K are configured as the set A, and CSI-ReportConfig # B and corresponding CSI-ResourceConfig # Y and CSI-RS resource set # L are configured as the set B.

In some embodiments, different reporting quantities are configured for the first set and the second set. A first reporting quantity is used for the first set, and a second reporting quantity is used for the second set.

For example, new reporting quantities may be introduced for the set A and the set B. For example, for spatial beam prediction, a reporting quantity *cri-RSRP-Spatial-Inference*/ *cri-SINR-Spatial-Inference*/*SSB-Index-RSRP-Spatial-Inference*/*SSB-Index-RSRP-Spatial-Inference* is introduced for the set A, and a reporting quantity *cri-RSRP-Spatial-Measure*/*cri-SINR-Spatial-Measure*/*SSB-Index-RSRP-Spatial-Measure*/*SSB-Index-RSRP-Spatial-Measure* is introduced for the set B; for another example, for temporal beam prediction, a reporting quantity *cri-RSRP-Temporal-Inference*/*cri-SINR-Temporal-Inference*/*SSB-Index-RSRP-Temporal-Inference*/*SSB-Index-RSRP-Temporal-Inference* is introduced for the set A, and a reporting quantity *cri-RSRP-Temporal-Measure*/*cri-SINR-Temporal-Measure*/*SSB-Index-RSRP-Temporal-Measure*/ *SSB-Index-RSRP-Temporal-Measure* is introduced for the set B.

In some embodiments, the second set reuses an existing reporting quantity.

For example, the set B may reuse an existing reporting quantity *cri-RSRP*/*cri-SINR*/*ssb-Index-RSRP*/*ssb-Index-SINR*.

In some embodiments, the number of the reporting for the first set is the same as that of the reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be the same.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, the number of the reporting for the first set is different from that of the reporting for the second set.

For example, in the reporting information (such as a beam report or a CSI report of L1-RSRP/L1-SINR) reported by UE to gNB, the reporting for the set A and the reporting for the set B may be included. The number of CRI/SSBRI reports in the reporting for the set A and the reporting for the set B may be different.

Or, in the reporting information (such as a beam report or a CSI report of L1-RSRP/L1-SINR) reported by UE to gNB, the reporting for the set A may be included but the reporting for the set B may not be included. Or, in the reporting information (such as a beam report or a CSI report of L1-RSRP/L1-SINR) reported by UE to gNB, the reporting for the set B may be included but the reporting for the set A may not be included.

In some embodiments, in the reporting information, the reporting for the first set or the reporting for the second set is identified explicitly by a resource set indicator.

For example, in the reporting information, an indicator (such as a resource set indicator) may be introduced to identify a corresponding CSI-RS resource set for the CRI/SSBRI (for example, the resource set indicator is used to identify which one of the CRI/SSBRI for the set A and the CRI/SSBRI for the set B). The length of the CRI/SSBRI is determined by the number of CSI-RS resources/SSBs in the corresponding resource set.

In some embodiments, the reporting for the first set or the reporting for the second set is identified implicitly.

For example, in the reporting information, the resource set indicator may be implicit. The order of CRI/SSBRI may be predefined and implicitly indicate the CRI/SSBRI is used for which one of the set A and the set B.

In some embodiments, one or more reference signals in the second set are transmitted, but a measurement result for the second set is not reported.

For example, a reporting quantity for the set B may be configured as "none", that is, the reference signals in the set B are transmitted, but the measurement result for the set B is not reported.

In some embodiments, one or more reference signals in the first set are not transmitted, a prediction result is reported by a reporting setting for the first set, and the reporting information is determined based on a configuration of the first set.

For example, the reference signals in the set A are not transmitted, and a prediction result/inference result are reported by the reporting setting of the set A (for example, new reporting quantities may be introduced or existing reporting quantities may be used). The CRI/SSBRI is determined based on a configuration of the set A.

In some embodiments, the reporting setting of the first set and the reporting setting of the second set are associated or paired; association or pairing is at a resource setting level, or at a resource set level, or at a resource level.

For example, the reporting settings of the set A and the set B may be associated/paired, and the association/pairing may be explicit or implicit. Or, the association/pairing between the set A and the set B may be at the resource setting level (CSI ResourceConfig level), or at the resource set level (CSI-RS resource set level), or at the resource level (CSI-RS resource level).

For another example, that reference signals of the set A are not transmitted, may be explicitly or implicitly configured. For example, the reference signals of the set A are configured to be periodic/semi-persistent, but are not configured with periodicity; or, the reference signals of the set A are configured to be aperiodic, but are not configured with a triggering state; or, the reference signals of the set A is not configured with a time-domain behavior.

In some embodiments, the reference signals in the first set and the reference signals in the second set are both transmitted, but the measurement result for the second set is not reported.

In some embodiments, the reference signals in the first set are transmitted, but the UE performs only prediction rather than measurement for the reference signals of the first set. The prediction result/inference result are reported by the reporting setting of the set A (for example, new reporting quantities may be introduced or existing reporting quantities may be used). The CRI/SSBRI is determined based on the configuration of the set A.

For example, the reporting quantity for the set B may be configured as "none", that is, the reference signals in the set B are transmitted, but the measurement result for the set B is not reported.

Hereinbefore the case of configuring the set A and the set B at various granularities is schematically illustrated, but the present application is not limited to this. Hereinafter the case of the set A and the set B is schematically illustrated.

In some embodiments, the reference signals for the second set are transmitted, while the reference signals for the first set are not transmitted.

For example, for beam management with AI/ML, the reference signals of the set B (for measurement) are transmitted, while the reference signals of the set A (for inference/prediction) are not transmitted.

In some embodiments, the reporting setting is configured for the second set, and the first set is associated or paired with the second set; a configuration of the first set is at a resource setting level, or at a resource set level, or at a resource level; the prediction result for the first set is reported, and the reporting information is determined based on the configuration of the first set.

For example, the reporting setting (such as CSI ReportConfig) may be configured for the set B. In the reporting setting of the set B, the set A is associated/paired with the set B. Configuration of the set A (or its association/pairing with the set B) is at a resource setting (such as CSI-ResourceConfig) level, or at a resource set (such as CSI-RS resource set) level, or at a resource (such as a CSI-RS resource) level. The association/pairing between the set A and the set B may be explicit, or may be implicit.

For another example, the reference signals of the set A are not transmitted, and may be explicitly or implicitly configured. For example, the reference signals of the set A are configured to be periodic/semi-persistent, but are not configured with periodicity; or, the reference signals of the set A are configured to be aperiodic, but are not configured with a triggering state; or, the reference signals of the set A is not configured with a time-domain behavior.

For another example, in the reporting information, a prediction beam from the set A rather than the set B is reported. The CRI/SSBRI is determined based on the configuration of the set A. If multiple resource sets are configured for the set A, an indicator (such as a resource set indicator) may be introduced to identify a corresponding CSI-RS resource set for the CRI/SSBRI. Or, the resource group indicator may be implicit. The order of CRI/SSBRI may be predefined and implicitly indicate a resource set.

For another example, new reporting quantities may be introduced, or existing reporting quantities may be used.

In some embodiments, the reporting setting is configured for the first set, and the second set is associated or paired with the first set; a configuration of the second set is at a resource setting level, or at a resource set level, or at a resource level; the prediction result for the first set is reported, a result for the second set is not reported, and the reporting information is determined based on the configuration of the first set.

For example, the reporting setting (such as CSI ReportConfig) may be configured for the set A. In the reporting setting of the set A, the set B is associated/paired with the set A. Configuration of the set B (or its association/pairing with the set A) is at a resource setting (such as CSI-ResourceConfig) level, or at a resource set (such as CSI-RS resource set) level, or at a resource (such as a CSI-RS resource) level. The association/pairing between the set A and the set B may be explicit, or may be implicit.

For another example, the reference signals of the set A are not transmitted, and may be explicitly or implicitly configured. For example, the reference signals of the set A are configured to be periodic/semi-persistent, but are not configured with periodicity; or, the reference signals of the set A are configured to be aperiodic, but are not configured with a triggering state; or, the reference signals of the set A is not configured with a time-domain behavior.

For another example, in the reporting information, the prediction beam from the set A is reported. The CRI/SSBRI is determined based on the configuration of the set A. If multiple resource sets are configured for the set A, an indicator (such as a resource set indicator) may be introduced to identify a corresponding CSI-RS resource set for the CRI/SSBRI. Or, the resource group indicator may be implicit. The order of CRI/SSBRI may be predefined and implicitly indicate a resource set.

For another example, new reporting quantities may be introduced, or existing reporting quantities may be used.

In some embodiments, the reference signals for the second set are transmitted, and at least a part of the reference signals for the first set are transmitted for performance monitoring.

For example, for beam management with AI/ML, the reference signals of the set B (for measurement) are transmitted, while the reference signals of the set A (for inference/prediction) may also be transmitted for performance monitoring. For example, a subset of the reference signals of the set A may be transmitted for performance monitoring.

In some embodiments, different reporting settings are configured for the first set and the second set.

For example, the set A and the set B may be configured with different reporting settings (or reporting configurations, such as CSI ReportConfig).

For another example, the reporting quantity for the first set is the same as the reporting quantity for the second set, or the reporting quantity for the first set is different from the reporting quantity for the second set.

For another example, a reporting period for the first set is the same as a reporting period for the second set, or the reporting period for the first set is different from the reporting period for the second set.

In some embodiments, in the reporting setting for the second set, the first set is associated or paired with the second set; the association or pairing is at a resource setting level, or at a resource set level, or at a resource level.

For example, in the reporting setting of the set B, the set A is associated/paired with the set B. The association/pairing with the set B may be at the resource setting level (such as CSI ResourceConfig level), or at the resource set level (such as CSI-RS resource set level), or at the resource level (CSI-RS resource level).

In some embodiments, the reporting setting of the first set is associated or paired with the reporting setting of the second set; in the reporting setting for the first set, one or more performance metrics based on the reference signals from the first set is/are reported.

For example, the reporting settings of the set A and the set B may be associated/paired. The association/pairing between the set A and the set B may be explicit, or may be implicit. In the reporting information, a prediction beam from the set A rather than the set B is reported. The CRI/SSBRI is determined based on the configuration of the set A. L1-RSRP or L1-SINR may be reported for the prediction beam of the set A.

For another example, in the reporting setting of the set A, a performance metric based on the reference signals of the set A is reported. For example, if the AI/ML model is at a UE side and the UE may determine whether a model/functionality may operate well, such as whether the functionality/model has failed, then the reporting quantity of the reporting settings for the set A may be configured as "none".

In some embodiments, part or all of the reference signals for the second set may also be used for performance monitoring.

In some embodiments, at least a part of the reference signals or the resource sets for measurement or inference are the same as at least a part of the reference signals or the resource sets for performance monitoring.

For example, the reference signals/the resource sets for inference (or for measurement) and performance monitoring may be the same. Or, subsets of the reference signals/the resource sets for inference (or for measurement) and performance monitoring may be the same.

In some embodiments, the reference signals or the resource sets for measurement or inference are different from the reference signals or the resource sets for performance monitoring.

For example, the reference signals/the resource sets for inference (or for measurement) and performance monitoring may be different. Or, subsets of the reference signals/the resource sets for inference (or for measurement) and performance monitoring may be different.

In some embodiments, at least a part of the resource settings applied for measurement or inference are the same as at least a part of the resource settings applied for performance monitoring.

In some embodiments, the resource settings applied for measurement or inference are different from those applied for performance monitoring.

In some embodiments, at least a part of the reporting settings applied for measurement or inference are the same as at least a part of the reporting settings applied for performance monitoring.

In some embodiments, the reporting settings applied for measurement or inference are different from those applied for performance monitoring.

For example, new reporting quantities may be introduced for performance monitoring, or existing reporting quantities may be used for performance monitoring.

For another example, if a separate report setting for performance monitoring is configured, if the AI/ML model is at a UE side and the UE may determine whether a model/functionality may operate well, such as whether the functionality/model has failed, then the reporting quantity for performance monitoring may be configured as "none".

In some embodiments, a time-domain behavior for the first set and a time-domain behavior for the second set are the same, or the time-domain behavior for the first set and the time-domain behavior for the second set are different; the time-domain behavior includes one of the following: periodic, semi-persistent, or aperiodic behaviors.

For example, two periodic CSI-RS resource sets (or two semi-persistent CSI-RS resource sets) may be configured, one for the set A and the other for the set B. The periodicities of the set A and the set B may be the same, or the periodicities of the set A and the set B may be different.

For another example, if the set A and the set B are configured by different reporting settings, a same time-domain behavior may be applied, or different time-domain behaviors may be applied; if the set A and the set B are configured by a same reporting setting, the same time-domain behavior may be applied for the set A and the set B.

In some embodiments, a time-domain behavior for the reporting of the first set and a time-domain behavior for the reporting of the second set are the same, or, the time-domain behavior for the reporting of the first set and the time-domain behavior for the reporting of the second set are different; the time-domain behavior includes one of the following: periodic, semi-persistent, or aperiodic behaviors.

For example, if the set A and the set B are configured by different reporting settings, a same time-domain behavior may be applied for the reporting for the set A and the reporting for the set B, or different time-domain behaviors may be applied for the reporting for the set A and the reporting for the set B; if the set A and the set B are configured by a same reporting setting, the same time-domain behavior may be applied for the reporting for the set A and the reporting for the set B.

Hereinafter multi-TRP or multi-panel beam management may be further explained below.

In some embodiments, when performing multi-TRP or multi-panel beam management, the number of resources or the number of resource sets for the first set and the second set configured for the terminal equipment is increased.

For example, for beam management with AI/ML in a multi-TRP or multi-panel scenario, the number of the set A and the set B configured for UE (or the number of the CSI-RS resource sets for the set A and the set B) should be increased.

In some embodiments, the number of resources or the number of resource sets for the first set and the second set configured for the terminal equipment is 2M, where M is the number of resources or the number of resource sets for the first set and the second set configured for the terminal equipment when performing beam management for a single TRP or a single panel.

For example, in a single-TRP or single-panel scenario, assuming that the number of the set A (or the number of the CSI-RS resource sets for the set A) is K, and the number of the set B (or the number of the CSI-RS resource sets for the set B) is L, then in a multi-TRP or multi-panel scenario, the number of the set A (or the number of the CSI-RS resource sets for the set A) is 2*K, and the number of the set B (or the number of the CSI-RS resource sets for the set B) is 2*L, that is, the number of the set A and the set B (or the number of the CSI-RS resource sets for the set A and the set B) is doubled.

In some embodiments, the number of resources or the number of resource sets for the first set and the second set configured for the terminal equipment is N*M, where M is the number of resources or the number of resource sets for the first set and the second set configured for the terminal equipment when performing beam management for a single TRP or a single panel, and N is the number of the TRP or the panel.

For example, assuming that the number of TRP/panel is N, the number of the set A (or the number of the CSI-RS resource sets for the set A) is N*K, and the number of the set B (or the number of the CSI-RS resource sets for the set B) is N*L, that is, the configurations of the set A and the set B are per-TRP/per-panel.

FIG. 8 is another exemplary diagram of resource configuration in the embodiments of the present application, showing the case where the set A and the set B are configured via different CSI-RS resource sets in a multi-TRP or multi-panel scenario. As shown in FIG. 8, for beam management with AI/ML, the set A and the set B are configured for UE via different CSI-RS resource sets. In the multi-TRP or multi-panel scenario, the number of the CSI-RS resource sets for the set A and the set B is doubled.

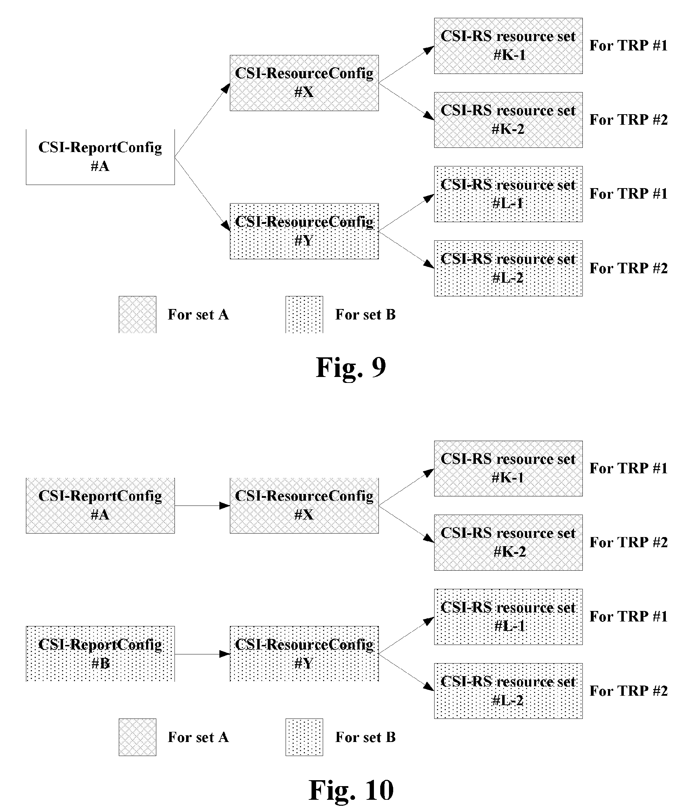

FIG. 9 is another exemplary diagram of resource configuration in the embodiments of the present application, showing the case where the set A and the set B are configured via different CSI-RS resource settings in a multi-TRP or multi-panel scenario. As shown in FIG. 9, for beam management with AI/ML, the set A and the set B are configured for UE via different CSI-RS resource settings (such as CSI-ResourceConfig). In the multi-TRP or multi-panel scenario, the number of the CSI-RS resource sets for the set A and the set B is doubled.

FIG. 10 is another exemplary diagram of resource configuration in the embodiments of the present application, showing the case where the set A and the set B are configured via different CSI-RS reporting settings in a multi-TRP or multi-panel scenario. As shown in FIG. 10, for beam management with AI/ML, the set A and the set B are configured for UE via different CSI-RS reporting settings or reporting configurations (such as CSI-ReportConfig). In the multi-TRP or multi-panel scenario, the number of the CSI-RS resource sets for the set A and the set B is doubled.

The multi-TRP or multi-panel scenario has been schematically illustrated hereinbefore, and the present application is not limited to this. For example, the present application may be applied to a single-DCI multi-TRP operation, or may be applied to a multi-DCI multi-TRP operation.

In addition, all embodiments of the present application may be applied to an AI/ML for beam management at a terminal side (a UE side) and also to an AI/ML for beam management at a network side (a gNB side). All embodiments in the present application may be applied for spatial beam prediction, or may be applied for temporal beam prediction.

The embodiments above only schematically illustrate the present application, but the present application is not limited to this, and appropriate variations can also be made on the basis of the above embodiments. For example, the above embodiments may be used separately, or one or more of the above embodiments may be combined.

As can be seen from the above embodiments of the present application, the embodiments of the present application are able to configure a set for beam measurement and a set for beam prediction for the terminal equipment, thereby improving accuracy and reliability of AI/ML.

### Embodiments of a Second Aspect

The embodiments of the present application provide a resource configuration method, which is illustrated from a network device side. The embodiments of the second aspect may be combined with the embodiments of the first aspect, and the same content as the embodiments of the first aspect will not be repeated.

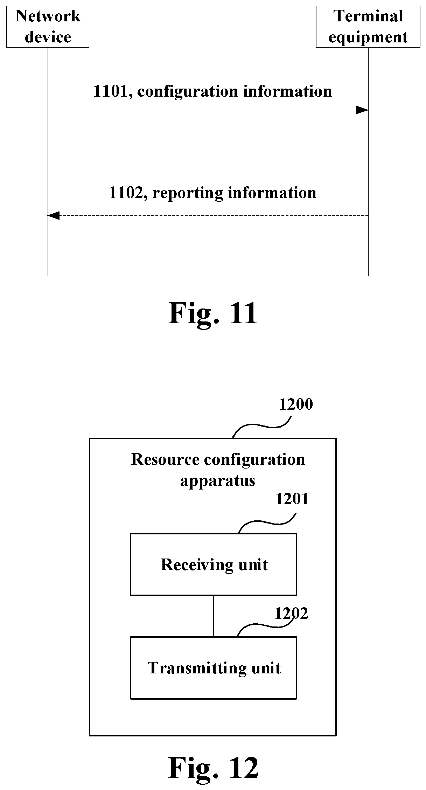

FIG. 11 is a schematic diagram of a resource configuration method in the embodiments of the present application, as shown in FIG. 11, the method including:
1101: a network device transmits configuration information to a terminal equipment, wherein the configuration information includes a resource configuration, the resource configuration includes a second set for beam measurement and a first set for beam prediction, and the configuration information further includes a reporting configuration for reporting in respect of the second set and/or the first set.

As shown in FIG. 11, the method may further include:
1102: the network device receives reporting information transmitted by the terminal equipment, wherein reporting for the first set and/or reporting for the second set are included in the reporting information.

It is worth noting that FIG. 11 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 11 above.

The embodiments above only schematically illustrate the present application, but the present application is not limited to this, and appropriate variations can also be made on the basis of the above embodiments. For example, the above embodiments may be used separately, or one or more of the above embodiments may be combined.

As can be seen from the above embodiments of the present application, the embodiments of the present application are able to configure a set for beam measurement and a set for beam prediction for the terminal equipment, thereby improving accuracy and reliability of AI/ML.

### Embodiments of a Third Aspect

The embodiments of the present application provide a resource configuration apparatus. The apparatus may be, for example, a terminal equipment, or one or more parts or components configured in the terminal equipment, and the same content as the embodiment of the first aspect will not be repeated.

FIG. 12 is a schematic diagram of a resource configuration apparatus in the embodiments of the present application. As shown in FIG. 12, a resource configuration apparatus 1200 includes:
a receiving unit 1201 configured to receive configuration information from a network device, wherein the configuration information includes a resource configuration, the resource configuration includes a second set for beam measurement and a first set for beam prediction, and the configuration information further includes a reporting configuration for reporting in respect of the second set and/or the first set.

In some embodiments, as shown in FIG. 12, the resource configuration apparatus 1200 may further include:
a transmitting unit 1202 configured to transmit reporting information to the network device, wherein reporting for the first set and/or reporting for the second set are included in the reporting information.

In some embodiments, the terminal equipment or the network device is configured with an AI/ML model for beam management, the second set is used for an input of the AI/ML model, and the first set is used for an output of the AI/ML model.

In some embodiments, the first set and the second set are configured by using CSI-RS/CSI-SSB resource set(s), wherein one or more CSI-RS/CSI-SSB resource sets are configured as the first set, and one or more other CSI-RS/CSI-SSB resource sets are configured as the second set.

In some embodiments, a distinction between the CSI-RS/CSI-SSB resource set for the first set and the CSI-RS/CSI-SSB resource set for the second set is configured by RRC;
the number of the CSI-RS/CSI-SSB resource set for the first set is the same as that of the CSI-RS/CSI-SSB resource set for the second set, or, the number of the CSI-RS/CSI-SSB resource set for the first set is different from that of the CSI-RS/CSI-SSB resource set for the second set.

In some embodiments, the number of the reporting for the first set is the same as that of the reporting for the second set, or the number of the reporting for the first set is different from that of the reporting for the second set.

In some embodiments, in the reporting information, the reporting for the first set or the reporting for the second set is identified explicitly by a resource set indicator, or, the reporting for the first set or the reporting for the second set is identified implicitly.

In some embodiments, the first set and the second set are configured by resources in the CSI-RS/CSI-SSB resource set, wherein one or more CSI-RS/CSI-SSB resources are configured as the first set, and one or more other CSI-RS/CSI-SSB resources are configured as the second set.

In some embodiments, the CSI-RS/CSI-SSB resource set for the first set is divided into a plurality of groups, one group including one or more CSI-RS/CSI-SSB resources and corresponding to the first set, and another group including one or more CSI-RS/CSI-SSB resources and corresponding to the second set.

In some embodiments, the number of the reporting for the first set is the same as that of the reporting for the second set, or the number of the reporting for the first set is different from that of the reporting for the second set.

In some embodiments, in the reporting information, the reporting for the first set or the reporting for the second set is identified explicitly by a resource group indicator, or, the reporting for the first set or the reporting for the second set is identified implicitly.

In some embodiments, the first set and the second set are configured by resource settings, wherein one or more CSI-RS/CSI-SSB resource sets in one resource setting are configured as the first set, and one or more CSI-RS/CSI-SSB resource sets in another resource setting are configured as the second set.

In some embodiments, the number of the reporting for the first set is the same as that of the reporting for the second set, or the number of the reporting for the first set is different from that of the reporting for the second set.

In some embodiments, in the reporting information, the reporting for the first set or the reporting for the second set is identified explicitly by a resource set indicator, or, the reporting for the first set or the reporting for the second set is identified implicitly.

In some embodiments, the first set and the second set are configured by a reporting setting, wherein one or more reporting resources are configured as the first set, and one or more other reporting resources are configured as the second set.

In some embodiments, different reporting quantities are configured for the first set and the second set.

In some embodiments, a first reporting quantity is used for the first set, and a second reporting quantity is used for the second set; or the second set reuses an existing reporting quantity.

In some embodiments, the number of the reporting for the first set is the same as that of the reporting for the second set, or the number of the reporting for the first set is different from that of the reporting for the second set.

In some embodiments, in the reporting information, the reporting for the first set or the reporting for the second set is identified explicitly by a resource set indicator, or, the reporting for the first set or the reporting for the second set is identified implicitly.

In some embodiments, one or more reference signals in the second set are transmitted, but a measurement result for the second set is not reported;
reference signals in the first set are not transmitted, a prediction result is reported by a reporting setting for the first set, and the reporting information is determined based on the configuration of the first set.

In some embodiments, the reporting setting of the first set and the reporting setting of the second set are associated or paired;
association or pairing is at a resource setting level, or at a resource set level, or at a resource level.

In some embodiments, the reference signals in the first set and the reference signals in the second set are both transmitted, but the measurement result for the second set is not reported.

In some embodiments, the reference signals in the first set are transmitted, but only prediction rather than measurement is performed for the reference signals in the first set.

In some embodiments, the reference signals for the second set are transmitted, while the reference signals for the first set are not transmitted.

In some embodiments, the reporting setting is configured for the second set, and the first set is associated or paired with the second set; configuration of the first set is at a resource setting level, or at a resource set level, or at a resource level;
the prediction result for the first set is reported, and the reporting information is determined based on the configuration of the first set.

In some embodiments, the reporting setting is configured for the first set, and the second set is associated or paired with the first set; configuration of the second set is at a resource setting level, or at a resource set level, or at a resource level;
the prediction result for the first set is reported, a result for the second set is not reported, and the reporting information is determined based on the configuration of the first set.

In some embodiments, the reference signals for the second set are transmitted, and at least a part of the reference signals for the first set are transmitted for performance monitoring.

In some embodiments, different reporting settings are configured for the first set and the second set.

In some embodiments, the reporting quantity for the first set is the same as the reporting quantity for the second set, or the reporting quantity for the first set is different from the reporting quantity for the second set.

In some embodiments, reporting period for the first set is the same as reporting period for the second set, or the reporting period for the first set is different from the reporting period for the second set.

In some embodiments, in the reporting setting for the second set, the first set is associated or paired with the second set; association or pairing is at a resource setting level, or at a resource set level, or at a resource level.

In some embodiments, the reporting setting of the first set is associated or paired with the reporting setting of the second set;
in the reporting setting for the first set, one or more performance metrics based on the reference signals from the first set are reported.

In some embodiments, part or all of the reference signals for the second set are used for performance monitoring.

In some embodiments, at least a part of the reference signals or the resource sets for measurement or inference are the same as at least a part of the reference signals or the resource sets for performance monitoring, or, the reference signals or the resource sets for measurement or inference are different from the reference signals or the resource sets for performance monitoring.

In some embodiments, at least a part of the resource settings applied for measurement or inference are the same as at least a part of the resource settings applied for performance monitoring, or, the resource settings applied for measurement or inference are different from those applied for performance monitoring.

In some embodiments, at least a part of the reporting settings applied for measurement or inference are the same as at least a part of the reporting settings applied for performance monitoring, or, the reporting settings applied for measurement or inference are different from those applied for performance monitoring.

In some embodiments, a time-domain behavior for the first set and a time-domain behavior for the second set are the same, or the time-domain behavior for the first set and the time-domain behavior for the second set are different;
the time-domain behavior includes one of the following: periodic, semi-persistent, or aperiodic behaviors.

In some embodiments, a time-domain behavior for the reporting of the first set and a time-domain behavior for the reporting of the second set are the same, or, the time-domain behavior for the reporting of the first set and the time-domain behavior for the reporting of the second set are different;
the time-domain behavior includes one of the following: periodic, semi-persistent, or aperiodic behaviors.

In some embodiments, when performing multi-TRP or multi-panel beam management, the number of resources or the number of resource sets for the first set and the second set configured for the terminal equipment is increased.

In some embodiments, the number of resources or the number of resource sets for the first set and the second set configured for the terminal equipment is 2M, where M is the number of resources or the number of resource sets for the first set and the second set configured for the terminal equipment when performing beam management for a single TRP or a single panel.

In some embodiments, the number of resources or the number of resource sets for the first set and the second set configured for the terminal equipment is N*M, where M is the number of resources or the number of resource sets for the first set and the second set configured for the terminal equipment when performing beam management for a single TRP or a single panel, and N is the number of the TRP or the panel.

The embodiments above only schematically illustrate the present application, but the present application is not limited to this, and appropriate variations can also be made on the basis of the above embodiments. For example, the above embodiments may be used separately, or one or more of the above embodiments may be combined.

It is worth noting that only the components or modules related to the present application are illustrated hereinbefore, but the present application is not limited to this. The resource configuration apparatus 1200 may further include other components or modules, and the details of these components or modules can be seen by referring to the related art.

In addition, for the sake of simplicity, FIG. 12 only illustratively shows the connection relationship or signal trend between the individual components or modules, but it should be clear to those skilled in the art that various related techniques such as bus connections can be employed. The above individual components or modules can be implemented by hardware facilities such as a processor, a memory, a transmitter, a receiver, etc., which is not limited in the present application.

As can be seen from the above embodiments of the present application, the embodiments of the present application are able to configure a set for beam measurement and a set for beam prediction for the terminal equipment, thereby improving accuracy and reliability of AI/ML.

### Embodiments of a Fourth Aspect

The embodiments of the present application provide a resource configuration apparatus. The apparatus may be, for example, a network device, or one or more parts or components configured in the network device, and the same content as the embodiments of the first and second aspects will not be repeated.

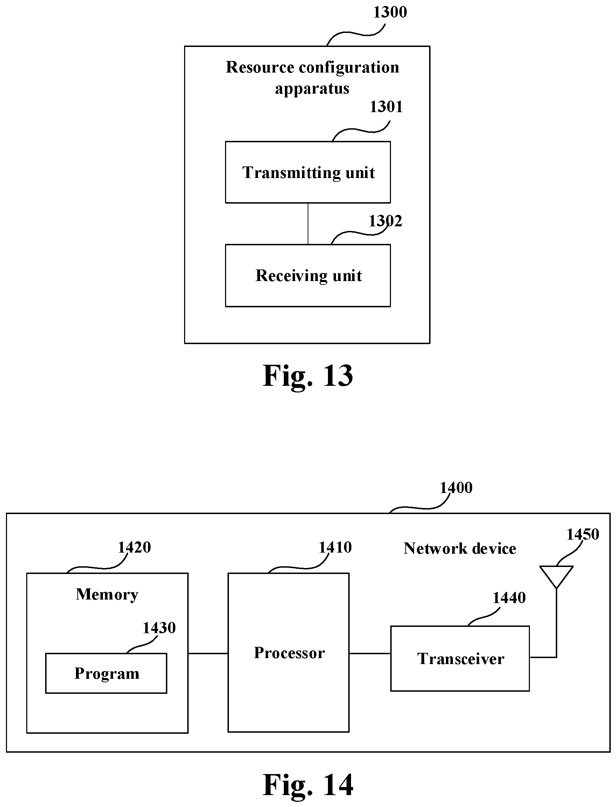

FIG. 13 is a schematic diagram of a resource configuration apparatus in the embodiments of the present application. As shown in FIG. 13, a resource configuration apparatus 1300 includes:
a transmitting unit 1301 configured to transmit configuration information to a terminal equipment;
wherein the configuration information includes a resource configuration, the resource configuration includes a second set for beam measurement and a first set for beam prediction, and the configuration information further includes a reporting configuration for reporting in respect of the second set and/or the first set.

In some embodiments, as shown in FIG. 13, the resource configuration apparatus 1300 may further include:
a receiving unit 1302 configured to receive reporting information transmitted by the terminal equipment;
wherein reporting for the first set and/or reporting for the second set are included in the reporting information.

It is worth noting that only the components or modules related to the present application are illustrated hereinbefore, but the present application is not limited to this. The resource configuration apparatus 1300 may further include other components or modules, and the details of these components or modules can be seen by referring to the related art.

In addition, for the sake of simplicity, FIG. 13 only illustratively shows the connection relationship or signal trend between the individual components or modules, but it should be clear to those skilled in the art that various related techniques such as bus connections can be employed. The above individual components or modules can be implemented by hardware facilities such as a processor, a memory, a transmitter, a receiver, etc., which is not limited in the present application.

As can be seen from the above embodiments of the present application, the embodiments of the present application are able to configure a set for beam measurement and a set for beam prediction for the terminal equipment, thereby improving accuracy and reliability of AI/ML.

### An Embodiment of Fifth Aspect

The embodiment of the present application further provides a communication system, referring to FIG. 1, the same content as the embodiments in the first to fourth aspects will not be repeated.

In some embodiments, the communication system 100 may include at least:
a network device configured to transmit configuration information, wherein the configuration information includes a resource configuration, the resource configuration includes a second set for beam measurement and a first set for beam prediction, and the configuration information further includes a reporting configuration for reporting in respect of the second set and/or the first set;
a terminal equipment configured to receive the configuration information from the network device.

The embodiments of the present application further provide a network device, which may be, for example, a base station, but which is not limited in the present application, and may also be other network devices.

FIG. 14 is a schematic diagram of composition of the network device in the embodiments of the present application. As shown in FIG. 14, a network device 1400 may include a processor 1410 (such as a central processing unit (CPU)) and a memory 1420; the memory 1420 is coupled to the processor 1410. The memory 1420 may store various data and also may store a program 1430 for information processing, and the program 1430 is executed under the control of the processor 1410.

For example, the processor 1410 may be configured to execute the program to implement the resource configuration method as described in the embodiments of the second aspect. For example, the processor 1410 may be configured to perform the following controls of: transmitting configuration information to a terminal equipment, wherein the configuration information includes a resource configuration, the resource configuration includes a second set for beam measurement and a first set for beam prediction, and the configuration information further includes a reporting configuration for reporting in respect of the second set and/or the first set;

In addition, as shown in FIG. 14, the network device 1400 may further include: a transceiver 1440 and an antenna 1450, etc., wherein the functionalities of the above components are similar to the related art, and will not be repeated here. It is worth noting that the network device 1400 is not necessarily required to include all of the components shown in FIG. 14; in addition, the network device 1400 may further include components not shown in FIG. 14, with reference to the related art.

The embodiments of the present application further provide a terminal equipment, but which is not limited in the present application, and may also be other devices.

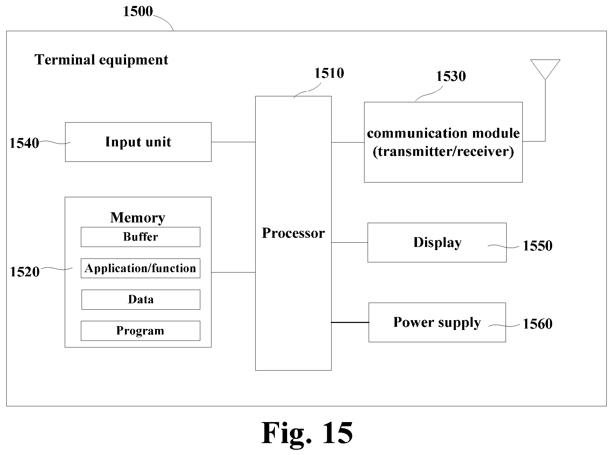

FIG. 15 is a schematic diagram of a terminal equipment in the embodiments of the present application. As shown in FIG. 15, a terminal equipment 1500 may include a processor 1510 and a memory 1520; the memory 1520 stores data and program, and is coupled to the processor 1510. It is worth noting that this figure is exemplary; other types of structures may also be used in addition to or instead of the structure to implement telecommunications functionalities or other functionalities.

For example, the processor 1510 may be configured to execute the program to implement the resource configuration method as described in the embodiments of the first aspect. For example, the processor 1510 may be configured to perform the following controls of: receiving configuration information from a network device, wherein the configuration information includes a resource configuration, the resource configuration includes a second set for beam measurement and a first set for beam prediction, and the configuration information further includes a reporting configuration for reporting in respect of the second set and/or the first set.

As shown in FIG. 15, the terminal equipment 1500 may further include a communication module 1530, an input unit 1540, a display 1550, and a power supply 1560. The functionalities of the above components are similar to the relevant art, and will not be repeated here. It is worth noting that the terminal equipment 1500 is not necessarily required to include all of the components shown in FIG. 15, and the above components are not essential; in addition, the terminal equipment 1500 may further include components not shown in FIG. 15, with reference to the relevant art.

The embodiments of the present application further provide a computer program which, when being executed in the terminal equipment, causes the terminal equipment to execute the resource configuration method described in the embodiments of the first aspect.

The embodiments of the present application further provide a storage medium storing a computer program which causes the terminal equipment to execute the resource configuration method described in the embodiments of the first aspect.

The embodiments of the present application further provide a computer program which, when being executed in the network device, causes the network device to execute the resource configuration method described in the embodiments of the second aspect.

The embodiments of the present application further provide a storage medium storing a computer program which causes the network device to execute the resource configuration method described in the embodiments of the second aspect.

The above apparatuses and methods of the present application can be implemented by hardware or by hardware combined with software. The present application relates to a computer readable program which, when being executed by a logic unit, enables the logic unit to implement the devices or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A resource configuration method, including:
   receiving, by a terminal equipment, configuration information from a network device,
   wherein the configuration information includes a resource configuration, the resource configuration includes a second set for beam measurement and a first set for beam prediction, and the configuration information further includes a reporting configuration for reporting in respect of the second set and/or the first set.
2. A resource configuration method, including:
   transmitting, by a network device, configuration information to a terminal equipment,
   wherein the configuration information includes a resource configuration, the resource configuration includes a second set for beam measurement and a first set for beam prediction, and the configuration information further includes a reporting configuration for reporting in respect of the second set and/or the first set.
3. A terminal equipment including a memory storing a computer program and a processor configured to execute the computer program to implement the resource configuration method according to the supplement 1.
4. A network device including a memory storing a computer program and a processor configured to execute the computer program to implement the resource configuration method according to the supplement 2.

## Claims

1. A resource configuration apparatus, comprising:
a receiving unit configured to receive configuration information from a network device,
wherein the configuration information comprises a resource configuration, the resource configuration comprising a second set for beam measurement and a first set for beam prediction, and the configuration information further comprises a reporting configuration for reporting in respect of the second set and/or the first set.

2. The resource configuration apparatus according to claim 1, wherein a terminal equipment or the network device is configured with an AI/ML model for beam management, the second set is used for an input of the AI/ML model, and the first set is used for an output of the AI/ML model.

3. The resource configuration apparatus according to claim 1, wherein the resource configuration apparatus further comprises:
a transmitting unit configured to transmit reporting information to the network device,
wherein reporting for the first set and/or reporting for the second set are comprised in the reporting information.

4. The resource configuration apparatus according to claim 1, wherein the first set and the second set are configured by using CSI-RS/CSI-SSB resource set(s), wherein one or more CSI-RS/CSI-SSB resource sets are configured as the first set, and one or more other CSI-RS/CSI-SSB resource sets are configured as the second set.

5. The resource configuration apparatus according to claim 4, wherein a distinction between a CSI-RS/CSI-SSB resource set for the first set and a CSI-RS/CSI-SSB resource set for the second set is configured by RRC,
the number of the CSI-RS/CSI-SSB resource set for the first set is the same as that of the CSI-RS/CSI-SSB resource set for the second set, or, the number of the CSI-RS/CSI-SSB resource set for the first set is different from that of the CSI-RS/CSI-SSB resource set for the second set.

6. The resource configuration apparatus according to claim 4, wherein the number of the reporting for the first set is the same as that of the reporting for the second set, or the number of the reporting for the first set is different from that of the reporting for the second set,
the reporting for the first set or the reporting for the second set is identified explicitly by a resource set indicator, or, the reporting for the first set or the reporting for the second set is identified implicitly.

7. The resource configuration apparatus according to claim 1, wherein the first set and the second set are configured by resources in a CSI-RS/CSI-SSB resource set, wherein one or more CSI-RS/CSI-SSB resources are configured as the first set, and one or more other CSI-RS/CSI-SSB resources are configured as the second set.

8. The resource configuration apparatus according to claim 7, wherein the CSI-RS/CSI-SSB resource set for the first set is divided into a plurality of groups, one group comprising one or more CSI-RS/CSI-SSB resources and corresponding to the first set, and another group comprising one or more CSI-RS/CSI-SSB resources and corresponding to the second set,
the number of the reporting for the first set is the same as that of the reporting for the second set, or the number of the reporting for the first set is different from that of the reporting for the second set,
the reporting for the first set or the reporting for the second set is identified explicitly by a resource group indicator, or, the reporting for the first set or the reporting for the second set is identified implicitly.

9. The resource configuration apparatus according to claim 1, wherein the first set and the second set are configured by a resource setting, wherein one or more CSI-RS/CSI-SSB resource sets in one resource setting are configured as the first set, and one or more CSI-RS/CSI-SSB resource sets in another resource setting are configured as the second set.

10. The resource configuration apparatus according to claim 9, wherein the number of the reporting for the first set is the same as that of the reporting for the second set, or the number of the reporting for the first set is different from that of the reporting for the second set,
the reporting for the first set or the reporting for the second set is identified explicitly by a resource set indicator, or, the reporting for the first set or the reporting for the second set is identified implicitly.

11. The resource configuration apparatus according to claim 1, wherein the first set and the second set are configured by a reporting setting, wherein one or more reporting resources are configured as the first set, and one or more other reporting resources are configured as the second set.

12. The resource configuration apparatus according to claim 11, wherein different reporting quantities are configured for the first set and the second set,
a first reporting quantity is used for the first set, and a second reporting quantity is used for the second set; or the second set reuses an existing reporting quantity,
the number of the reporting for the first set is the same as that of the reporting for the second set, or the number of the reporting for the first set is different from that of the reporting for the second set,
the reporting for the first set or the reporting for the second set is identified explicitly by a resource set indicator, or, the reporting for the first set or the reporting for the second set is identified implicitly.

13. The resource configuration apparatus according to claim 11, wherein one or more reference signals in the second set are transmitted, but a measurement result for the second set is not reported; one or more reference signals in the first set are not transmitted, a prediction result is reported by a reporting setting for the first set, and reporting information is determined according to a configuration of the first set; or one or more reference signals in the first set and one or more reference signals in the second set are both transmitted, but a measurement result for the second set is not reported; or one or more reference signals in the first set are transmitted, but prediction rather than measurement is performed for the reference signals in the first set,
and/or, a reporting setting of the first set is associated or paired with a reporting setting of the second set; association or pairing is at a resource setting level, or at a resource set level, or at a resource level.

14. The resource configuration apparatus according to claim 1, wherein one or more reference signals for the second set are transmitted, while one or more reference signals for the first set are not transmitted,
a reporting setting is configured for the second set, and the first set is associated or paired with the second set; a configuration of the first set is at a resource setting level, or at a resource set level, or at a resource level; a prediction result for the first set is reported, and reporting information is determined according to the configuration of the first set;
or,
a reporting setting is configured for the first set, and the second set is associated or paired with the first set; a configuration of the second set is at a resource setting level, or at a resource set level, or at a resource level; a prediction result for the first set is reported, a result for the second set is not reported, and reporting information is determined according to the configuration of the first set.

15. The resource configuration apparatus according to claim 1, wherein one or more reference signals for the second set are transmitted, and at least a part of the reference signals for the first set are transmitted for performance monitoring; or part or all of the reference signals for the second set are used for performance monitoring,
different reporting settings are configured for the first set and the second set,
a reporting quantity for the first set is the same as a reporting quantity for the second set, or a reporting quantity for the first set is different from a reporting quantity for the second set,
a reporting period for the first set is the same as a reporting period for the second set, or a reporting period for the first set is different from a reporting period for the second set,
in a reporting setting for the second set, the first set is associated or paired with the second set; association or pairing is at a resource setting level, or at a resource set level, or at a resource level,
a reporting setting for the first set is associated or paired with the reporting setting for the second set; in the reporting setting for the first set, one or more performance metrics according to the reference signals from the first set are reported.

16. The resource configuration apparatus according to claim 1, wherein at least a part of reference signals or resource sets for measurement or inference are the same as at least a part of reference signals or resource sets for performance monitoring, or, reference signals or resource sets for measurement or inference are different from reference signals or resource sets for performance monitoring,
at least a part of resource settings applied for measurement or inference are the same as at least a part of resource settings applied for performance monitoring, or, resource settings applied for measurement or inference are different from resource settings applied for performance monitoring,
at least a part of reporting settings applied for measurement or inference are the same as at least a part of reporting settings applied for performance monitoring, or, reporting settings applied for measurement or inference are different from reporting settings applied for performance monitoring.

17. The resource configuration apparatus according to claim 1, wherein a time-domain behavior for the first set is the same as a time-domain behavior for the second set, or a time-domain behavior for the first set is different from a time-domain behavior for the second set; the time-domain behavior comprises one of the following: periodic, semi-persistent, or aperiodic,
a time-domain behavior for reporting of the first set is the same as a time-domain behavior for reporting of the second set, or, a time-domain behavior for reporting of the first set is different from a time-domain behavior for reporting of the second set; the time-domain behavior comprises one of the following: periodic, semi-persistent, or aperiodic.

18. The resource configuration apparatus according to claim 1, wherein when performing beam management for multiple TRPs or multiple panels, the number of resources or the number of resource sets for the first set and the second set configured for a terminal equipment is increased,
wherein the number of resources or the number of resource sets for the first set and the second set configured for a terminal equipment is 2M, where M is the number of resources or the number of resource sets for the first set and the second set configured for the terminal equipment when performing beam management for a single TRP or a single panel;
or,
the number of resources or the number of resource sets for the first set and the second set configured for a terminal equipment is N*M, where M is the number of resources or the number of resource sets for the first set and the second set configured for the terminal equipment when performing beam management for a single TRP or a single panel, and N is the number of the TRP or the panel.

19. A resource configuration apparatus, comprising:
a transmitting unit configured to transmit configuration information to a terminal equipment,
wherein the configuration information comprises a resource configuration, the resource configuration comprises a second set for beam measurement and a first set for beam prediction, and the configuration information further comprises a reporting configuration for reporting in respect of the second set and/or the first set.

20. A communication system, comprising:
a network device configured to transmit configuration information, wherein the configuration information comprises a resource configuration, the resource configuration comprises a second set for beam measurement and a first set for beam prediction, and the configuration information further comprises a reporting configuration for reporting in respect of the second set and/or the first set; and
a terminal equipment configured to receive the configuration information from the network device.
